# EUROPEAN PATENT APPLICATION

(11) **EP 4 806 310 A1**
(43) Date of publication of application: **16.09.2026**
(21) Application number: 26153135.4
(22) Date of filing: 21.01.2026
(51) Int. Cl.: A47J 31/44, A47J 31/46, A47J 31/52

(54) **COFFEE MACHINE WITH MILK FROTHING SYSTEM**

(30) Priority: 14.03.2025 IT 202500005250
(71) Applicant: SIMONELLI GROUP S.P.A., 62020 Belforte del Chienti (MC) (IT)
(72) Inventor: PARRINI, Mauro, 63821 PORTO SANT'ELPIDIO (FM) (IT); CINGOLANI, Claudio Enrico, 62032 CAMERINO (MC) (IT); FELIZIANI, Marco, 62029 TOLENTINO (MC) (IT)
(74) Representative: Cutropia, Gianluigi

(57) **Abstract**

A coffee machine (100) comprises a user interface (90) configured so that the user can enter a final temperature (Tf) and a frothing degree (Gf) of the milk, and a control unit (9) comprising an interpolator (91) configured to interpolate the temperatures (T) detected by a temperature probe so as to obtain a temperature curve over time and calculate an inclination (α) of the temperature curve, and an algorithm (92) that receives said final temperature (Tf), frothing degree (Gf), and inclination (α) of the temperature curve and accordingly calculate an injection time (ti) to close the steam and air valves (7, 8) and a quantity of air (Q) to adjust a shutter of the air valve (8).

## Description

The present invention relates to a coffee machine provided with a milk frothing system based on a particular algorithm.

In coffee machines, in addition to coffee extraction, milk processing is becoming increasingly important, and particularly milk frothing for the preparation of beverages with frothed milk. For such a purpose, coffee machines comprise a steam wand for heating and frothing the milk. The steam wand is immersed in the milk contained in a milk jug to inject hot steam that heats the milk and creates the desired foam.

Recently, milk frothing recipes based on the desired temperature of the milk, namely cold, warm, or hot, have become popular. For such a purpose, coffee machines provided with a steam wand having a temperature sensor or probe to detect the temperature of the milk in the milk jug are available on the market. In view of the above, the operator can set milk frothing recipes based on the desired milk temperature.

EP4461168A1, in the name of the same applicant, discloses a coffee machine with a temperature sensor to detect the temperature of the milk.

During the frothing process, the machine controls the following three parameters:
- the temperature (T) of the milk in the jug,
- the injection time (tᵢ) of the air to froth the milk contained in the jug, and
- the air flow rate (P) for frothing the milk contained in the jug.

The temperature (T) of the milk is measured by a temperature probe located in the steam wand.

The injection time (tᵢ) is measured by a timer.

The air flow rate (P) is measured based on a pressure of the air supplied by a compressor and on the opening degree of a proportional valve located in an air supply conduit that feeds air into the steam wand.

It should be noted that the quantity of milk frothing depends on a quantity of air (Q) fed into the steam wand.

The quantity of air (Q) is given by the air flow rate (P) by the injection time (tᵢ), that is to say Q = P/tᵢ.

For each recipe to be obtained, with more or less foam, the operator must set two main parameters:
- the final temperature (Tf) of the frothed milk, and
- the desired frothing degree (Gf).

The final temperature (Tf) of the milk does not depend on the quantity (volume) of milk contained in the jug. In fact, the temperature probe of the steam wand detects the temperature (T) of the milk until it reaches the final temperature (Tf), regardless of the quantity of milk contained in the jug.

Instead, the desired frothing degree (Gf) depends on the quantity of milk contained in the jug and on the quantity of air (Q). In fact, the frothing degree (Gf) is a percentage of foam relative to the total quantity of milk.

If the quantity of air (Q) remains constant, an increase in the quantity of milk will result in a lower frothing degree than would have been obtained with a lower quantity of milk.

This means that for each jug with a different volume, a recipe with a different quantity of air must be set in order to obtain the same frothing degree. Therefore, depending on the quantity of milk contained in the jug, every time, the operator will have to set a different recipe with a different quantity of air even if the same frothing degree is to be obtained.

AU2020319152A1 discloses a milk frothing device comprising: a steam source; a source of pressurized air; a dispensing unit to dispense air and steam to the beverage; an air flow rate regulating device arranged downstream of the source of pressurized air; a control unit programmed to operate, in use, the simultaneous supply of steam and air to the dispensing unit, respectively from the steam source and from the source of pressurized air.

The purpose of the present invention is to eliminate the drawbacks of the prior art by providing a coffee machine with a milk frothing system that is versatile and capable of automatically adjusting to different quantities of milk to be frothed.

Another purpose is to provide such a coffee machine with a milk frothing system that is precise, accurate, and reliable.

These purposes are achieved in accordance with the invention with the characteristics of the attached independent claims.

Advantageous embodiments of the invention appear from the dependent claims.

The coffee machine with milk frothing system according to the invention is defined in claim 1.

The invention aims to eliminate the management of the two parameters consisting of the injection time (tᵢ) and quantity of air (Q) based on the volume of milk contained in the jug and to estimate the quantity of milk in the jug using the milk temperature detected by the temperature probe of the steam wand.

The air flow rate (P) is known, which is correlated to the air pressure detected by a pressure sensor of a compressor and to the diameter of the passage hole of the electric valve that controls the air flow to the steam wand.

Using the temperature data measured by the temperature probe, a straight line representing the milk heating temperature is drawn. By measuring the inclination of the straight line representing the milk heating temperature, the quantity of milk in the jug can be estimated.

Such an estimate allows to know the quantity of milk contained in the jug and then automatically adjust the two parameters: injection time (tᵢ) and quantity of air (Q) thanks to a special algorithm, and thus have the same percentage of frothed milk in the recipe regardless of the quantity of milk contained in the jug.

This system greatly simplifies the programming of milk frothing, as it is simply necessary to set the final temperature (Tf) of the milk and the frothing degree (Gf) that will be converted by the algorithm into injection time (tᵢ) and quantity of air (Q) according to the quantity of milk contained in the jug.

If a scale from 1 to 10 is used for the frothing degree (Gs), a cappuccino with frothing degree Gf = 4 will always have the same percentage of frothed milk, regardless of the quantity of milk contained in the jug. This means that the operator can make several cappuccinos using the same recipe. This makes the operator's job easier, as the operator simply needs to match the recipe to the frothing degree (Gf) chosen for the beverage that is being prepared, without thinking about matching the right recipe to the right quantity of milk contained in the jug.

Further features of the invention will become clearer from the following detailed description, which refers to a purely illustrative and therefore non-limiting embodiment, illustrated in the accompanying drawings, wherein:

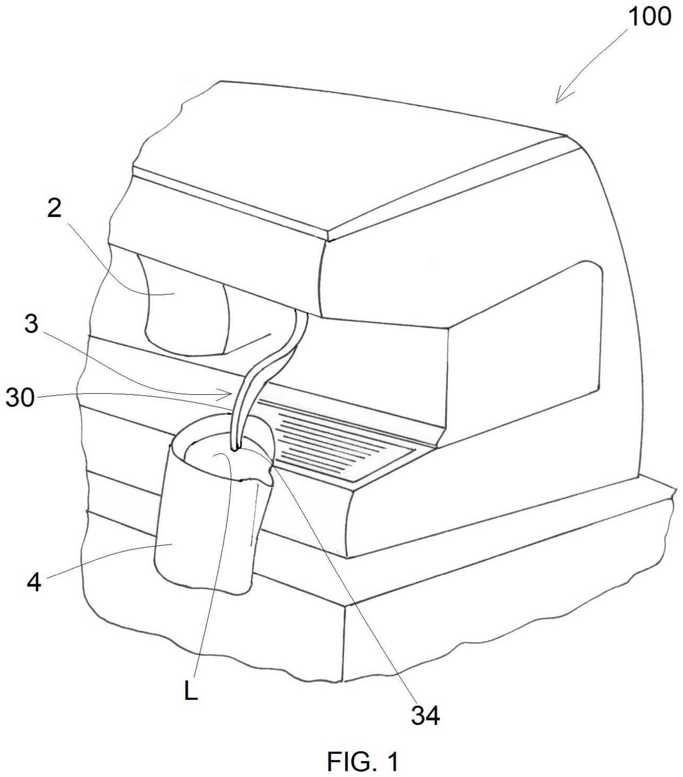

Fig. 1 is a perspective view, schematically illustrating a coffee machine with a steam wand;
Fig. 2 is a schematic cross-sectional view of the steam wand immersed in a jug containing milk and a hydraulic diagram of the steam wand;
Fig. 3 is a block diagram illustrating the operation of the control unit of the coffee machine according to the invention during milk frothing; and
Fig. 4 is a graph illustrating the heating temperature trend of the milk in the jug.

With the aid of the Figures, the coffee machine with milk frothing system according to the invention, which is generally indicated with reference numeral 100, is described.

The coffee machine (100) comprises:
- a boiler (1) for heating water and supplying steam,
- a dispensing unit (2) suitable for accommodating a filter holder and dispensing pressurized hot water for extracting coffee from the filter holder, and
- a steam wand (3) suitable for dispensing a pressurized air-steam mixture for heating and frothing milk.

The steam wand (3) is suitable for being immersed in a jug (4) containing milk (L) to inject said air-stream mixture into the milk so as to froth the milk in the jug.

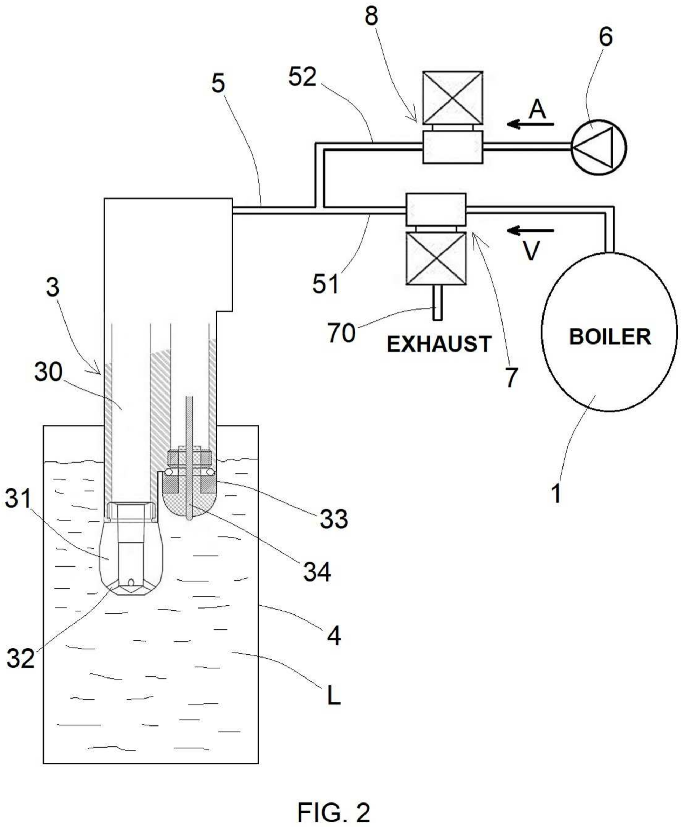

With reference to Fig. 2, the steam wand (3) comprises a dispensing conduit (30) leading to a dispensing nozzle (31) provided with holes (32) for dispensing steam into the milk (L) contained in the jug (4).

The steam wand (3) further comprises a presence sensor (33) and a temperature probe (34).

The presence sensor (33) suitable for detecting the presence of milk, i.e., for detecting when the dispensing nozzle (31) is immersed in the milk (L) contained in the jug.

The temperature probe (34) is suitable for detecting a temperature (T) of the milk (L) contained in the jug. The temperature probe (34) is located side by side to the dispensing nozzle (31) and is therefore immersed in the milk (L) contained in the jug.

The dispensing conduit (30) of the steam wand communicates with a supply conduit (5) into which steam (V) from the boiler (1) and air (A) pumped by a compressor (6) or by a pump are fed.

For such a purpose, the construction of the coffee machine comprises a steam conduit (51) wherein steam (V) flows, and an air conduit (52) wherein the air (A) flows. The steam and air conduits (51, 52) are connected to the supply conduit (5) connected to the dispensing conduit (30) of the steam wand, so as to feed an air-steam mixture into the steam wand that is injected in the milk to heat and froth it.

A steam valve (7) is located in the steam conduit (51). The steam valve (7) is a three-way ON/OFF electric valve with an outlet (70) connected to an exhaust. The steam valve (7) opens and closes the communication between the boiler (1) and the supply conduit (5) or between the boiler (1) and the exhaust.

The boiler (1) is pressurized to a pressure of 1.2 or 1.8 bar. If the boiler supplies a steam pressure of 1.2 bar, the steam valve (7) has a 5 mm passage hole for the passage of steam. If the boiler supplies a steam pressure of 1.8 bar, the steam valve (7) has a 3 mm passage hole for the passage of steam.

The compressor (6) sends pressurized air with a pressure of 2 bar into the air conduit (52).

An air valve (8) is located in the air conduit (52). The air valve (8) is a proportional electric valve with a shutter that can close the air valve with an opening degree from 0% to 100%. Otherwise said, the passage hole of the air valve (8) varies according to the opening degree of the air valve.

The pressure of the steam (V) given by the boiler (1) and the diameter of the passage hole of the steam given by the structural specifications of the steam valve (7) are fixed and known parameters.

The pressure of the air (A) given by the compressor (6) is a fixed and known parameter. Conversely, the diameter of the passage hole of the air given by the opening degree of the air valve, is a variable parameter based on the opening degree of the valve, but is nevertheless known.

Since the pressure of the air (A) and the diameter of the passage hole of the air are known, a flow rate (P) of the air passing through the air valve (8) is also known. It should be noted that a milk frothing degree depends on the quantity of air (Q) and can be modified by adjusting the air valve (8) in such a way to vary the opening degree of the air valve.

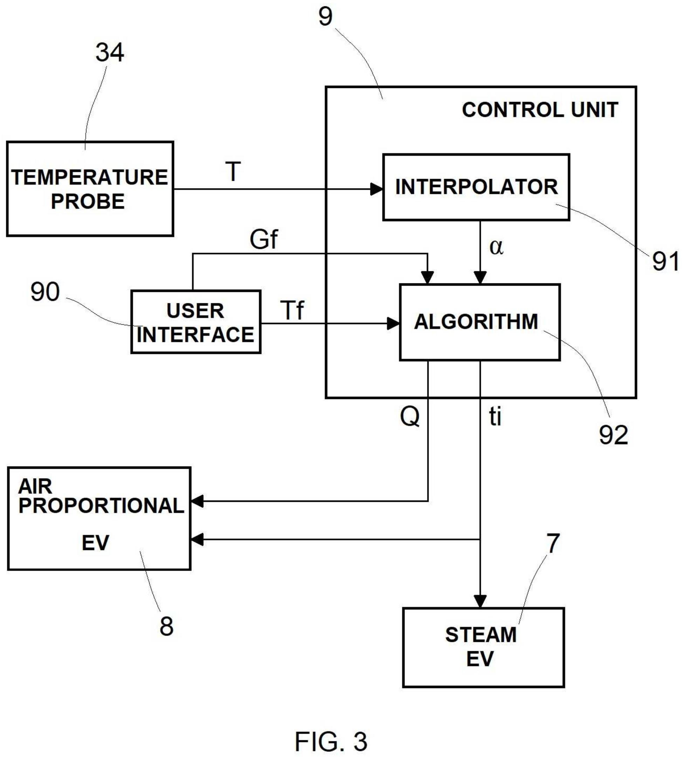

With reference to Fig. 3, the coffee machine comprises a control unit (9) and a user interface (90).

The temperature probe (34) of the steam wand is connected to the control unit (9), so that the control unit (9) receives the temperature (T) detected by the temperature probe.

The user interface (90) is configured so that the user can enter a final temperature (Tf) of the milk and a frothing degree (Gf) of the milk. The user interface (90) is connected to the control unit (9) so as to transmit the final temperature (Tf) and the frothing degree (Gf).

Evidently, the control unit (9) may have a memory wherein various recipes with specific final temperature (Tf) and frothing degree (Gf) are stored. In such a case, the operator only needs to select the recipe via the user interface (90).

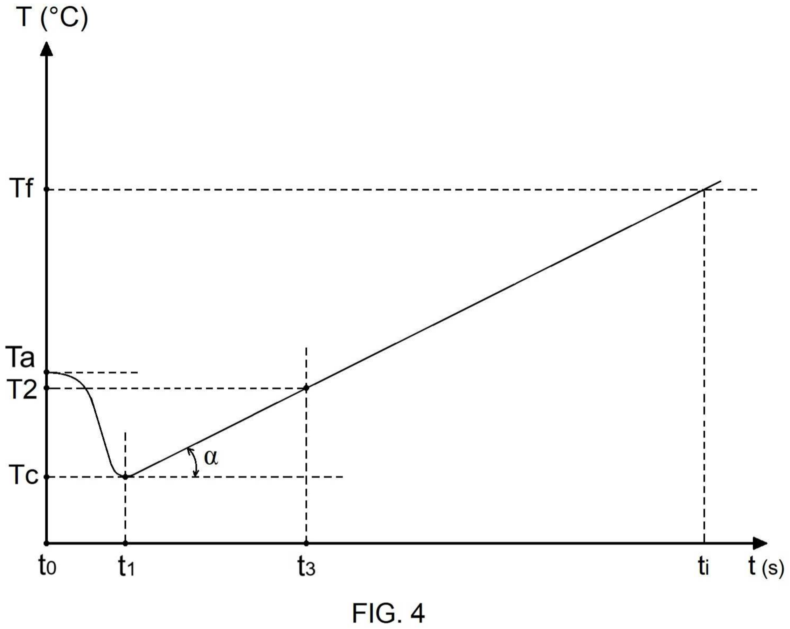

The control unit (9) comprises an interpolator (91) that draws a temperature curve, as shown in Fig. 4, based on the temperature values (T) over time. The interpolator (91) can be a simple linear interpolator or even a more sophisticated spline interpolator.

At the initial time (t₀), the temperature probe (34) is not yet immersed in the milk and therefore measures an ambient temperature (T₀).

Generally, the milk (L) in the jug (4) is cold at a temperature (Tc) lower than the ambient temperature (T₀). Therefore, when the steam wand (3) is immersed in the milk, the temperature curve will decrease from the ambient temperature (T₀) to the temperature (Tc) of the cold milk.

At time (t1), the steam and air valves (7, 8) open and an air-steam mixture is injected into the milk to heat it. The temperature curve rises with a substantially linear, straight trend.

After a short period of time, at time (t2), the inclination (α) of the temperature curve is calculated. The interpolator (91) is configured to calculate the inclination (α) of the temperature curve at a time (t2) in which the temperature curve has a temperature (T2) lower than the final temperature (Tf).

If at time t2 the temperature is T2, then the inclination is given by the following formula: $α = arctan \left(\frac{T 2 - Tc}{t 2 - t 1}\right)$

Going back to Fig. 3, the control unit (9) comprises an algorithm (92) that receives the final temperature (Tf) and the frothing degree (Gf) from the user interface and the inclination (α) of the temperature curve as input. Based on the final temperature (Tf), on the frothing degree (Gf) and on the inclination (α) of the temperature curve, the algorithm (92) calculates the injection time (tᵢ) and the quantity of air (Q).

By way of example, the injection time (tᵢ) is calculated with the following formula: ${t}_{i} = \frac{Tf - T 2}{Tan \left(α\right)} + t 2$

The quantity of air (Q) is calculated with the following formula: $Q = P * {t}_{i}$

The quantity of air (Q) is used to regulate the opening degree of the air valve (8). The injection time (tᵢ) is used to close the steam valve (7) and the air valve (8) in order to interrupt the injection of the air-steam mixture into the milk.

Numerous variations and detailed modifications can be made to the present embodiment of the invention, within the reach of a person skilled in the art, however falling within the scope of the invention as expressed by the appended claims.

## Claims

1. Coffee machine (100) comprising:
- a boiler (1) for heating water and supplying steam,
- a steam wand (3) suitable for dispensing a pressurized air-steam mixture; said steam wand (3) being suitable for being immersed in a jug (4) containing milk (L) to inject said air-steam mixture into the milk so as to froth and heat the milk in the jug,
- a temperature probe (34) arranged in the steam wand (3) to detect a temperature of the milk in the jug,
- a steam valve (7) arranged between the boiler (1) and the steam wand (3) to open/close a steam flow from the boiler (1) to the steam wand (3),
- a compressor (6) to provide compressed air,
- an air valve (8) arranged between the compressor (6) and the steam wand (3) and configured to adjust an air flow from the compressor (6) to the steam wand (3); said air valve (8) being a proportional valve with an adjustable shutter according to an opening degree of the air valve,
- a user interface (90) configured so that the user can enter a final temperature (Tf) and a frothing degree (Gf) of the milk, and
- a control unit (9) connected to said temperature probe (34) to receive the detected temperature (T), to said user interface (90) to receive said final temperature (Tf) and said frothing degree (Gf) of the milk, and to said steam valve (7) and air valve (8) in order to control them,
wherein said control unit (9) comprises:
- an interpolator (91) configured to interpolate the temperatures (T) detected by the temperature probe so as to obtain a temperature curve over time and calculate an inclination (α) of said temperature curve, and
- an algorithm (92) configured to receive said final temperature (Tf) of the milk, said frothing degree (Gf) of the milk, and said inclination (α) of the temperature curve and accordingly calculate an injection time (tᵢ) to close said steam valve and air valve (7, 8) and a quantity of air (Q) to adjust said shutter of the air valve (8).

2. The coffee machine (100) according to claim 1, wherein said air valve (8) is a proportional electric valve having a shutter that can close the air valve with an opening degree from 0% to 100%.

3. The coffee machine (100) according to claim 1 or 2, wherein said steam valve (7) is a 3-way on-off electric valve having an outlet (70) connected to an exhaust.

4. The coffee machine (100) according to any of the preceding claims, wherein said interpolator (91) is a linear interpolator or a spline interpolator.

5. The coffee machine (100) according to any of the preceding claims, wherein said interpolator (91) is configured to calculate said inclination (α) of the temperature curve at a time (t2) in which the temperature curve has a temperature (T2) lower than said final temperature (Tf).

6. The coffee machine (100) according to claim 5, wherein said algorithm (92) is configured to calculate the injection time (tᵢ) with the following formula: ${t}_{i} = \frac{Tf - T 2}{Tan \left(α\right)} + t 2$

7. The coffee machine (100) according to any of the preceding claims, wherein said algorithm (92) is configured to calculate the quantity of air (Q) with the following formula: $Q = P * {t}_{i}$ where P is the air flow rate through said air valve (8) which is given by the pressure imparted by said compressor (6) and by the opening degree of the shutter of said air valve (8).

8. The coffee machine (100) according to any of the preceding claims, wherein said control unit (9) has a memory in which a plurality of frothing recipes with a given final temperature (Tf) and a given frothing degree (Gf) of the milk are stored and said user interface (90) is configured to select one of said frothing recipe.
